# EUROPÄISCHE PATENTSCHRIFT

(11) **EP 4 323 236 B1**
(45) Veröffentlichungstag und Bekanntmachung des Hinweises auf die Patenterteilung: **16.10.2024**
(21) Anmeldenummer: 22710566.5
(22) Anmeldetag: 04.03.2022
(51) Int. Cl.: B60Q 9/00, B60Q 3/78, B60Q 3/80, B60K 35/00, B60K 35/28, B60L 1/14

(54) **KOMMUNIKATIONSLICHTVORRICHTUNG FÜR EINEN FAHRZEUGINNENRAUM UND KRAFTFAHRZEUG MIT EINER KOMMUNIKATIONSLICHTVORRICHTUNG**
COMMUNICATION LIGHT DEVICE FOR A VEHICLE INTERIOR, AND MOTOR VEHICLE HAVING A COMMUNICATION LIGHT DEVICE
DISPOSITIF LUMINEUX DE COMMUNICATION POUR HABITACLE DE VÉHICULE ET VÉHICULE AUTOMOBILE ÉQUIPÉ D'UN DISPOSITIF LUMINEUX DE COMMUNICATION

(30) Priorität: 16.04.2021 DE 102021109574
(43) Veröffentlichungstag der Anmeldung: 21.02.2024
(73) Patentinhaber: Audi AG, 85045 Ingolstadt (DE)
(72) Erfinder: HUPFER, Philip, 90559 Burgthann (DE)
(74) Vertreter: Hofstetter, Schurack & Partner
(86) Internationale Anmeldenummer: PCT/EP2022/055514
(87) Internationale Veröffentlichungsnummer: WO 2022/218602

(56) Entgegenhaltungen:
- WO-A1-2015/012771
- WO-A1-2018/194585
- DE-A1- 102015 117 658
- DE-A1- 102017 213 016
- DE-A1- 102017 222 174
- FR-A1- 3 005 717
- FR-A1- 3 086 732
- JP-A- 2013 246 930
- JP-A- 2016 060 313
- US-A1- 2011 317 442

## Beschreibung

Die Erfindung betrifft eine Kommunikationslichtvorrichtung für einen Fahrzeuginnenraum sowie ein Kraftfahrzeug mit einer solchen Kommunikationslichtvorrichtung.

Es ist bekannt, dass in einem Kraftfahrzeug eine Innenraumbeleuchtung beziehungsweise Ambientebeleuchtung bereitgestellt werden kann, die einen Fahrzeuginnenraum ausleuchten und/oder eine individuelle Atmosphäre im Fahrzeuginnenraum erzeugen kann. Neuere Konzepte sehen vor, Lichtsysteme als Kommunikationslicht ("Interior Communication Light") zu verwenden, die über eine geeignete Ansteuerung Lichtsignale für einen Fahrer bereitstellen können, um eine Kommunikation zu ermöglichen und dem Fahrer so Informationen zur Verfügung stellen. So können beispielsweise unterschiedliche Farben und zeitlich ansteuerbare Lichtsignale verwendet werden, um den Fahrer zu unterstützen, indem Funktionen und Warnungen des Kraftfahrzeugs visuell dargestellt werden. Eine solche Kommunikationslichtvorrichtung kann beispielsweise als langgezogenes Lichtband im Kraftfahrzeug bereitgestellt sein und dem Fahrer eine Fahrbereitschaft sowie das Entriegeln und Verriegeln des Autos signalisieren. Außerdem kann es Hinweise von Assistenz- und Navigationssystemen hervorheben und Bremsaufforderungen sowie eingehende Telefonanrufe ankündigen. Des Weiteren kann die Kommunikationslichtvorrichtung durch zeitliche Ansteuerung als Lauflicht ausgebildet sein und so beispielsweise eine Richtung anzeigen, in die ein Spurwechsel empfohlen wird. Auch kann so gewarnt werden, falls sich das Kraftfahrzeug auf der falschen Spur befindet oder sich ein weiteres Fahrzeug in einem toten Winkel befindet. Insgesamt können mit einer Kommunikationslichtvorrichtung also eine Fahrsicherheit und ein Komfort während der Fahrt verbessert werden.

Aus der DE 10 2019 108 312 A1 ist eine Kommunikationslichtvorrichtung für Fahrzeuge mit einer Anzahl von Lichtquellen mit einer langgestreckten Optikeinheit zur Erzeugung einer Leuchtsignatur bekannt, mit einer Ansteuereinheit zur Ansteuerung der Anzahl von Lichtquellen, sodass eine Längserstreckung der langgestreckten Optikeinheit eine örtlich und/oder zeitlich veränderbare Lichtabstrahlung und/oder Leuchtfläche erzeugt wird, wobei die Kommunikationslichtvorrichtung als ein Karosserieanbauteil ausgebildet ist, das an einer Außenseite der Fahrzeugkarosserie angeordnet ist und sich in horizontaler Richtung vollständig entlang einer Frontseite und/oder vollständig entlang einer Heckseite des Fahrzeugs und/oder vollständig oder teilweise entlang einer Längsseite des Fahrzeugs erstreckt.

Aus der DE 10 2016 118 717 A1 ist eine Beleuchtungsvorrichtung für Fahrzeuge mit einer Anzahl von Lichtquellen, die entlang einer Verteilerrichtung in einer Reihe beabstandet zueinander angeordnet sind, mit einem in Hauptabstrahlrichtung vor den Lichtquellen angeordneten langgestreckten Lichtführungselement, das sich einstückig entlang einer parallel zu der Verteilrichtung verlaufenden Längsrichtung erstreckt, bekannt, wobei das Lichtführungselement auf einer den Lichtquellen zugewandten Seite eine Lichteintrittsfläche und auf einer den Lichtquellen abgewandten Seite eine Lichtaustrittsfläche aufweist, wobei die Lichtaustrittsfläche eine linsenförmige Kontur aufweist, wobei das Lichtführungselement als eine langgestreckte Linse ausgebildet ist, wobei zumindest eine Grundseite der Lichtaustrittsfläche stetig von einer ersten Stirnseite der langgestreckten Linse zu einer zweiten Stirnseite derselben verläuft und wobei die erste Stirnseite der langgestreckten Linse im Bereich einer ersten endseitigen Lichtquelle der Reihe von Lichtquellen und die zweite Stirnseite der langgestreckten Linse im Bereich einer zweiten endseitigen Lichtquelle derselben Reihe von Lichtquellen angeordnet ist.

Aus der DE 10 2017 213 016 A1 ist eine Beleuchtungsvorrichtung für einen Innenraum eines Fahrzeugs bekannt, umfassend einen durch Hohlraumwände gebildeten Hohlraum, wenigstens eine im Inneren des Hohlraums angeordnete LED-Lichtquelle, einen Lichtleiter mit einer Lichteintrittsfläche und einer Lichtaustrittsfläche, wobei die Lichteintrittsfläche in den Hohlraum zeigt und die Lichtaustrittsfläche in den Innenraum des Fahrzeugs zeigt, wobei die LED-Lichtquelle so im Hohlraum angeordnet ist, dass der gesamte von der LED-Lichtquelle ausgehende Lichtstrom durch wenigstens ein Streuungsmittel gestreut wird, und wenigstens ein Teil des gestreuten Lichtstroms über die Lichteintrittsfläche in den Lichtleiter eintritt und schließlich über die Lichtaustrittsfläche in den Innenraum des Fahrzeugs austritt.

Aus der DE 10 2017 222 174 A1 ist eine Beleuchtungsvorrichtung für einen Innenraum eines Kraftfahrzeugs bekannt. Diese weist mehrere Lichtquellen und wenigstens einen transparenten oder zumindest transluzenten Körper auf. Erzeugte Lichtstrahlen der Lichtquellen gelangen in einen Körper und können aus diesem in Richtung des Innenraums austreten. Die Lichtquellen sind in einem Hohlraum und in einem Abstand von dem Körper angeordnet. Der Hohlraum wird von wenigstens einem Innenverkleidungsteil umgeben. Durch das wenigstens eine Innenverkleidungsteil wird eine schlitzartige Öffnung freigelassen, derart, dass die Lichtquellen entlang der Öffnung angeordnet und durch die Öffnung nicht direkt sichtbar sind. Von den Lichtquellen erzeugte Lichtstrahlen werden im Hohlraum zunächst diffus reflektiert und gelangen dann in den Körper. Die aus dem Körper austretenden Lichtstrahlen treten im Bereich der Öffnung aus dem Körper aus.

Weitere Beleuchtungsvorrichtungen sind aus der JP 2016 060313 A, der DE 10 2015 117658 A1 und der FR 3 005 717 A1 bekannt.

Problematisch bei Kommunikationslichtvorrichtungen für den Fahrzeuginnenraum ist es, dass im Fahrzeuginnenraum oftmals nur wenig Platz vorhanden ist, wodurch eine Lichtmischung der einzelnen Lichtquellen, um eine gleichmäßige Helligkeit und/oder eine geeignete Farbmischung zu erhalten, erschwert wird. Die oben gezeigten Konzepte sind hauptsächlich für die Außenseite der Fahrzeugkarosserie ausgebildet und sind daher oftmals für den Fahrzeuginnenraum ungeeignet, da diese zu viel Platz einnehmen.

Der Erfindung liegt die Aufgabe zugrunde, eine verbesserte Kommunikationslichtvorrichtung für einen Fahrzeuginnenraum bereitzustellen, insbesondere bezüglich eines Platzbedarfs und einer Lichtmischung.

Diese Aufgabe wird durch die unabhängigen Patentansprüche gelöst. Vorteilhafte Weiterbildungen der Erfindung sind durch die abhängigen Patentansprüche, die folgende Beschreibung sowie die Figuren offenbart.

Die Erfindung basiert auf der Erkenntnis, dass aktuelle Konzepte nicht für sehr kleine Bauräume geeignet sind. Auch die Verwendung von Lichtleitern, die das Licht an die gewünschte Stelle transportieren, ist nachteilig, da zusätzliche Verschweißungen beziehungsweise Verrastungen im Inneren benötigt werden. Die Idee ist, eine Lichtmischung von Lichtquellen durch ein Gehäuse, insbesondere ein Gehäuseoberteil, zu erreichen, das aus einem reflektierenden Material hergestellt ist und eine Lichtaustrittsöffnung aufweist, in der das Licht in den Fahrzeuginnenraum austreten kann.

Durch die Erfindung ist eine Kommunikationslichtvorrichtung für einen Fahrzeuginnenraum bereitgestellt, mit einem Gehäuse, wobei an einem Gehäuseboden Lichtquellen in einer Reihe angeordnet sind, wobei die Lichtquellen dazu ausgebildet sind, ein zeitlich ansteuerbares Lichtsignal zu erzeugen, wobei eine Seitenwand des Gehäuses eine Lichtaustrittsöffnung aufweist, die sich in Richtung der Reihe der Lichtquellen über die Seitenwand erstreckt und die in einer bestimmungsgemäßen Einbaulage der Kommunikationslichtvorrichtung in Richtung des Fahrzeuginnenraums weist, und wobei Innenwände des Gehäuses eine diffus reflektierende Oberfläche aufweisen.

Mit anderen Worten sind in einem Gehäuse der Kommunikationslichtvorrichtung mehrere Lichtquellen in Reihe angeordnet, insbesondere an einem Gehäuseboden des Gehäuses. Diese Lichtquellen können ein zeitlich ansteuerbares Lichtsignal erzeugen, womit gemeint ist, dass diese beispielsweise blinkend oder als Lauflicht ausgebildet sein können. Innerhalb des Gehäuses weisen Innenwände eine diffus reflektierende Oberfläche auf, sodass ein Lichtsignal von den Lichtquellen diffus gestreut werden kann und somit Übergänge zwischen den Lichtsignalen der einzelnen Lichtquellen gleichmäßiger werden, also eine Lichtmischung stattfindet. Somit kann erreicht werden, dass das Licht, das aus der Kommunikationslichtvorrichtung austritt, einen gleichmäßigeren Übergang zwischen den jeweiligen Lichtquellen aufweist und keine sichtbaren Abgrenzungen auftreten. Zur Abstrahlung in den Fahrzeuginnenraum kann das Gehäuse eine Lichtaustrittsöffnung an einer Seitenwand aufweisen, die sich parallel zu der Reihe der Lichtquellen erstrecken kann. Insbesondere kann die Lichtaustrittsöffnung länglich ausgebildet sein, sodass die Lichtaustrittsöffnung wie ein Lichtband ausgebildet ist, über das das Licht aus dem Gehäuse der Kommunikationslichtvorrichtung in den Innenraum abgestrahlt werden kann. Vorzugsweise kann die Kommunikationslichtvorrichtung in einem Sichtbereich des Fahrers im Fahrzeuginnenraum angeordnet sein, beispielsweise an einer Scheibenwurzel der Frontscheibe oder einem Armaturenbrett des Kraftfahrzeugs.

Als Lichtquelle können beispielsweise Glühlampen, Halogenlampen, Leuchtstofflampen, Gasentladungsröhren und/oder LEDs verwendet werden. Als diffus reflektierende Oberfläche kann ein Material oder eine Lackierung verwendet werden, die einen wesentlichen Anteil des Lichtsignals reflektiert, wobei vorzugsweise keine gerichtete Reflexion wie bei einem Spiegel stattfindet, sondern mehrere Streuzentren bereitgestellt sind, die das Licht gleichmäßig in alle Raumrichtungen streuen. Durch die Oberfläche in dem Gehäuse findet also eine Remission des Lichtsignals statt.

Des Weiteren ist vorgesehen, dass zwischen den jeweiligen Lichtquellen Blendstege angeordnet sind, wobei die Blendstege dazu ausgebildet sind, in Abhängigkeit ihrer Höhe ein Übersprechen der Lichtsignale zwischen den Lichtquellen zu beeinflussen, wobei die Blendstege ferner dazu ausgebildet sind, die Höhe variabel zu ändern. So kann beispielsweise bei hochgezogenen Blendstegen zwischen den Lichtquellen ein Übersprechen des Lichtsignals verringert werden, wodurch schärfere Abgrenzungen des Lichts erreicht werden können. Bei niedrigen Blendstegen können die Lichtsignale von mehreren nebeneinander angeordneten Lichtquellen überlagert werden, wodurch weichere Übergänge und eine verbesserte Farbmischung erreicht werden kann. Dazu ist vorgesehen, dass die Blendstege dazu ausgebildet sind, eine Höhe variabel zu ändern. So können beispielsweise Elektromotoren bereitgestellt sein, die die Blendstege nach oben und unten verfahren können. Die Blendstege können beispielsweise als Lamellen bereitgestellt sein, die verfahrbar ausgebildet sind. Hierdurch ergibt sich der Vorteil, dass bei einem Herstellungsprozess der Kommunikationslichtvorrichtung mittels der Höhe der Blendstege eine Lichtmischung der Lichtsignale eingestellt werden kann. Alternativ können die Blendstege auch verfahrbar ausgebildet sein, was den Vorteil ergibt, dass während eines Betriebs der Kommunikationslichtvorrichtung das Übersprechen der Lichtsignale variabel eingestellt werden kann.

Durch die Erfindung ergibt sich der Vorteil, dass eine Kommunikationslichtvorrichtung mit einer verbesserten Lichtmischung und damit mit einer gleichmäßigeren Helligkeit bereitgestellt werden kann. Des Weiteren kann ein Bauraumbedarf der Kommunikationslichtvorrichtung verringert werden, da eine Lichtmischung nicht aufwändig über Lichtleiter durchgeführt wird, sondern durch das Gehäuse selber bereitgestellt werden kann. Auch kann ein Montageaufwand reduziert werden, da keine Lichtleiter verwendet werden müssen, was auch Kosten bei der Herstellung reduziert.

Die Erfindung umfasst auch Ausführungsformen, durch die sich zusätzliche Vorteile ergeben.

Eine Ausführungsform sieht vor, dass zum Reflektieren des Lichtsignals in Richtung der Lichtaustrittsöffnung eine den Lichtquellen gegenüberliegenden Innenwand des Gehäuses im Wesentlichen schräg angeordnet ist. Mit anderen Worten kann die den Lichtquellen gegenüberliegende Innenwand eine Neigung aufweisen, insbesondere eine gleiche Neigung wie eine Frontscheibe, damit die Kommunikationslichtvorrichtung besonders platzsparend im Fahrzeuginnenraum angeordnet werden kann. Vorzugsweise ist vorgesehen, dass die gegenüberliegende Innenwand derart geneigt ist, dass eine Flächennormale zumindest teilweise in Richtung der Seitenwand des Gehäuses zeigt, in der die Lichtaustrittsöffnung angeordnet ist. So können Lichtstrahlen von den Lichtquellen im Wesentlichen in Richtung der Lichtaustrittsöffnung gestreut werden. Im einfachsten Fall kann das Gehäuse der Kommunikationslichtvorrichtung als Dreieck ausgebildet sein, insbesondere als rechtwinkliges Dreieck, wobei hier beispielsweise die Lichtaustrittsöffnung an der Ankathete und die Lichtquellen an der Gegenkathete angeordnet sein können, wobei die schräge Innenwand als Hypotenuse bereitgestellt sein kann. Es können jedoch auch weitere geometrische Querschnittsformen für die Kommunikationslichtvorrichtung bereitgestellt sein. Durch diese Ausführungsform ergibt sich der Vorteil, dass die Helligkeit der Lichtsignale, die aus der Lichtaustrittsöffnung austreten, insgesamt erhöht werden kann. Des Weiteren kann die Kommunikationslichtvorrichtung besonders platzsparend bereitgestellt werden, insbesondere für eine Anordnung an einer Scheibenwurzel der Frontscheibe des Kraftfahrzeugs.

Eine weitere Ausführungsform sieht vor, dass an oder in der Lichtaustrittsöffnung ein Diffusor angeordnet ist. Vorzugsweise kann sich der Diffusor über die gesamte Lichtaustrittsöffnung erstrecken. Der Diffusor kann insbesondere eine Streuscheibe aus einem Kunststoff oder Quarzglas sein. Durch diese Ausführungsform ergibt sich der Vorteil, dass eine Lichtmischung weiter verbessert werden kann und ein weicheres Lichtsignal erzeugt werden kann.

Eine weitere Ausführungsform sieht vor, dass die Lichtquellen als Leuchtdioden ausgebildet sind. Das hat den Vorteil, dass die Lichtquellen besonders platzsparend sind und nur einen geringen Stromverbrauch aufweisen. Vorzugsweise ist vorgesehen, dass die Lichtquellen dazu ausgebildet sind, ein farblich ansteuerbares Lichtsignal zu erzeugen. So können verschiedene intuitive Farben für den Fahrer des Kraftfahrzeugs angezeigt werden, um eine Kommunikation bereitzustellen. So kann beispielsweise eine volle Batterie mit einer grünen Farbe dargestellt werden, während eine Warnung, etwa zum Anzeigen eines Bremsmanövers, rot dargestellt werden kann. Besonders bevorzugt können farbige Leuchtdioden verwendet werden, die auf einem Chip angeordnet sein können und die dazu ausgebildet sind, eine Lichtfarbe im sichtbaren Farbspektrum zu erzeugen. Insbesondere kann vorgesehen sein, dass einzelne rote, grüne und blaue Leuchtdioden nebeneinander und/oder hintereinander angeordnet sind, wobei diese vorzugsweise einzeln ansteuerbar sind und somit je nach Intensitätsansteuerung der roten, grünen und/oder blauen Leuchtdiode eine noch genauere Farbkomposition erreicht werden kann.

In vorteilhafter Weise können die Lichtquellen sowohl nebeneinander als auch hintereinander in der Reihe angeordnet sein. Das heißt, dass die Lichtquellen beispielsweise in einer Doppelreihe beziehungsweise Mehrfachreihe in der Kommunikationslichtvorrichtung am Gehäuseboden ausgebildet sind. Insbesondere können Farben von jeweilig nebeneinander beziehungsweise hintereinander liegenden Lichtquellen variieren, um eine besonders geeignete Lichtmischung zu erreichen.

Eine weitere Ausführungsform sieht vor, dass die diffus reflektierende Oberfläche eine weiße Oberfläche und/oder eine mit Aluminium bedampfte Schicht aufweist. Insbesondere kann die Innenwand des Gehäuses aus einem Plastik ausgebildet sein, beispielsweise Polykarbonat oder Polyamid und weiße Streupartikel aufweisen. Insbesondere können die Innenwände des Gehäuses vollständig weiß ausgestaltet sein, was den Vorteil ergibt, dass eine besonders kostengünstige diffus reflektierende Oberfläche erreicht werden kann. Alternativ oder zusätzlich können die Innenwände als eine mit Aluminium bedampfte Schicht ausgebildet sein, wodurch sich verbesserte Reflexionseigenschaften ergeben.

Eine weitere Ausführungsform sieht vor, dass die diffus reflektierende Oberfläche zusätzliche geometrische Strukturen, insbesondere Kissen und/oder Walzen, aufweist. Die geometrischen Strukturen können dazu ausgebildet sein, das Licht zusätzlich zu streuen, insbesondere in Abhängigkeit der jeweiligen Geometrie der Strukturen. So können beispielsweise Noppen, Kissen und/oder Walzen als geometrische Strukturen vorgesehen sein. Hierdurch ergibt sich der Vorteil, dass eine verbesserte Diffusion des Lichtsignals erreicht werden kann.

Vorzugsweise ist vorgesehen, dass die diffus reflektierende Oberfläche uneben ist, insbesondere eine Körnung aufweist. Mit anderen Worten kann die diffus reflektierende Oberfläche eine vorgegebene Oberflächengeometrie, insbesondere eine raue Oberfläche, aufweisen. So können mehrere Streuzentren bereitgestellt werden, an denen das Licht diffus gestreut werden kann. Beispielsweise kann die Oberfläche mit einem Material, insbesondere einem reflektierenden Material, bedampft sein, um eine Körnung bereitzustellen. Somit kann eine verbesserte Diffusion des Lichtsignals erreicht werden kann.

Ein weiterer Aspekt der Erfindung betrifft ein Kraftfahrzeug mit einer Kommunikationslichtvorrichtung nach einem der vorhergehenden Ausführungsformen. Hierbei ergeben sich gleiche Vorteile und Variationsmöglichkeiten wie bei der Kommunikationslichtvorrichtung. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

In einer Ausführungsform des Kraftfahrzeugs ist vorgesehen, dass die Kommunikationslichtvorrichtung an einer Frontscheibenwurzel angeordnet ist. So kann die Kommunikationslichtvorrichtung in einem Sichtbereich eines Fahrers des Kraftfahrzeugs bereitgestellt werden. Zur Anordnung der Kommunikationslichtvorrichtung an der Frontscheibenwurzel kann die den Lichtquellen gegenüberliegende Innenwand des Gehäuses im Wesentlichen parallel zur Frontscheibe angeordnet sein. Eine Höhe der Seitenwand, an der die Lichtaustrittsöffnung angeordnet ist, kann vorzugsweise derart vorgegeben sein, dass ein Bereich der Scheibenwurzel, an dem üblicherweise eine Projektionsvorrichtung eines Head-up-Displays angeordnet ist, vor Lichtstrahlen, insbesondere der Sonne, abgeschirmt wird. Das hat den Vorteil, dass die Kommunikationslichtvorrichtung in Kombination mit einem Head-up-Display zusammenwirken kann und Reflexionen durch Sonnenlicht auf das Head-up-Display mittels der Höhe der Seitenwand abgeblockt werden können.

Zu der Erfindung gehören auch Weiterbildungen des erfindungsgemäßen Kraftfahrzeugs, die Merkmale aufweisen, wie sie bereits im Zusammenhang mit den Weiterbildungen der erfindungsgemäßen Kommunikationslichtvorrichtung beschrieben worden sind. Aus diesem Grund sind die entsprechenden Weiterbildungen des erfindungsgemäßen Kraftfahrzeugs hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: ein schematisch dargestelltes Kraftfahrzeug mit einer Kommunikationslichtvorrichtung gemäß einer beispielhaften Ausführungsform;
- Fig. 2: eine seitliche Querschnittsansicht durch eine Kommunikationslichtvorrichtung gemäß einer beispielhaften Ausführungsform;
- Fig. 3: eine frontale Querschnittsansicht durch eine Kommunikationslichtvorrichtung gemäß einer beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

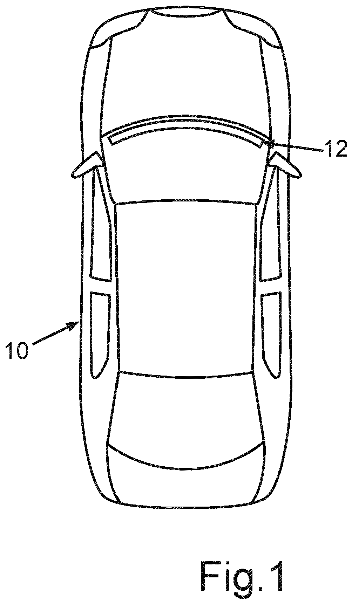

In Fig. 1 ist eine Draufsicht auf ein schematisch dargestelltes Kraftfahrzeug 10 mit einer Kommunikationslichtvorrichtung 12 gemäß einer beispielhaften Ausführungsform dargestellt. Das Kraftfahrzeug 10 kann beispielsweise als Personenkraftwagen ausgebildet sein, insbesondere als elektrisch betriebener Personenkraftwagen, und die Kommunikationslichtvorrichtung 12 in einem Sichtbereich eines Fahrers des Kraftfahrzeugs 10 aufweisen. Vorzugsweise kann die Kommunikationslichtvorrichtung 12 an einer Frontscheibenwurzel angeordnet sein und einem Fahrer des Kraftfahrzeugs 10 mittels Lichtsignalen Hinweise und/oder Warnungen anzeigen. Die Kommunikationslichtvorrichtung 12 kann vorzugsweise langgestreckt über die Breite des Fahrzeugs verlaufen und über ein farblich und/oder zeitlich veränderbares Lichtsignal verschiedene Informationen bereitstellen. So kann beispielsweise ein gelb ausgebildetes Lauflicht von links nach rechts oder umgekehrt vorgesehen sein, um dem Fahrer einen Spurwechsel anzuzeigen. Auch können beispielsweise Gefahrensituationen, die insbesondere von einem Fahrerassistenzsystem (nicht gezeigt) erkannt werden können, über die Kommunikationslichtvorrichtung 12, beispielsweise über die Darstellung eines roten Lichtes, bereitgestellt werden.

Durch die Anordnung der Kommunikationslichtvorrichtung 12 im Kraftfahrzeug 10, insbesondere an der Frontscheibenwurzel, ergibt sich die Schwierigkeit, dass nur ein geringer Raum für die Kommunikationslichtvorrichtung 12 zur Verfügung steht. Insbesondere eine Lichtmischung, um ein homogeneres Lichtsignal bereitzustellen, ist aufgrund des geringen Bauraums erschwert.

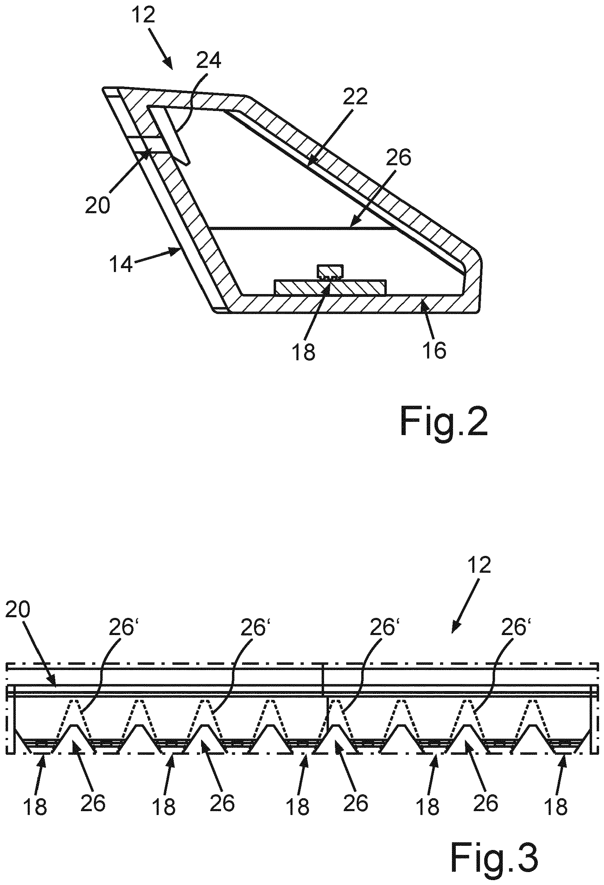

Daher hat es sich als vorteilhaft erwiesen, eine Kommunikationslichtvorrichtung 12 bereitzustellen, wie sie gemäß einer beispielhaften Ausführungsform in einer seitlichen Querschnittsansicht in Fig. 2 dargestellt ist. Die Kommunikationslichtvorrichtung 12 kann ein Gehäuse 14 aufweisen, wobei innerhalb vom Gehäuse 14 an einem Gehäuseboden 16 Lichtquellen 18 in einer Reihe angeordnet sind, wobei die Reihe der Lichtquellen 18 in dieser Ansicht in die Bildebene hinein verläuft. Die Lichtquellen 18 können vorzugsweise als Leuchtdioden ausgebildet sein, die ein farblich ansteuerbares Lichtsignal erzeugen. Hierzu können beispielsweise mehrere Leuchtdioden mit roter, grüner und blauer Farbe auf einem Chip angeordnet sein, die durch geeignete Ansteuerung eine Mehrzahl von Farben darstellen können.

An einer Seitenwand des Gehäuses 14 kann eine Lichtaustrittsöffnung 20 angeordnet sein, die sich länglich in Richtung der Reihe der Lichtquellen 18 (in die Bildebene hinein) über das Gehäuse 14 der Kommunikationslichtvorrichtung 12 erstreckt. Eine den Lichtquellen 18 gegenüberliegende Innenwand 22 des Gehäuses 14 kann vorzugsweise im Wesentlichen schräg angeordnet sein, sodass ein Lichtsignal von den Lichtquellen 18 im Wesentlichen in Richtung der Lichtaustrittsöffnung 20 reflektiert werden kann. Vorzugsweise ist hierbei ein Neigungswinkel der Seitenwand des Gehäuses 14 mit einem gleichen Neigungswinkel wie die Frontscheibe des Kraftfahrzeugs 10 ausgebildet. So kann die Kommunikationslichtvorrichtung 12 besonders platzsparend in das Kraftfahrzeug 10 an die Frontscheibenwurzel angeordnet werden.

Besonders bevorzugt ist vorgesehen, dass Innenwände des Gehäuses, insbesondere die den Lichtquellen 18 gegenüberliegende Innenwand 22, eine diffus reflektierende Oberfläche aufweist, die insbesondere dazu ausgebildet ist, das Licht diffus auf die Lichtaustrittsöffnung 20 zu streuen. Hierzu kann die Oberfläche beispielsweise eine mit Aluminium bedampfte raue Schicht aufweisen. Durch die Aluminiumpartikel kann eine Reflexionseigenschaft und mittels einer Körnung der Aluminiumpartikel eine Diffusionseigenschaft der Innenwände verbessert werden.

Um zusätzlich eine Homogenität des Lichtsignals zu erhöhen, kann innerhalb oder an der Lichtaustrittsöffnung 20 ein Diffusor 24, insbesondere eine Streuscheibe, angeordnet sein. Der Diffusor 24 kann vorzugsweise über die gesamte Fläche der Lichtaustrittsöffnung 20 verlaufen und somit zusammen mit der diffus reflektierenden Oberfläche ein homogenes und weiches Lichtsignal über die gesamte Lichtaustrittsöffnung bereitstellen.

Zwischen den jeweiligen Lichtquellen 18 können Blendstege 26 angeordnet sein, mittels denen ein Übersprechen von Lichtsignalen benachbarter Lichtquellen 18 beeinflusst werden kann. Insbesondere kann eine Höhe der Blendstege 26 beeinflussen, wie stark sich die Lichtsignale benachbarter Lichtquellen vermischen. Dies ist insbesondere bei der Verwendung verschiedenfarbiger Lichtquellen 18 vorteilhaft, um Farbübergänge einzustellen. Dies wird nachfolgend anhand der Fig. 3 weiter erläutert.

In Fig. 3 ist eine Kommunikationslichtvorrichtung 12 gemäß einer beispielhaften Ausführungsform in einer frontalen Querschnittsansicht dargestellt. Die frontale Ansicht kann die Richtung sein, mit der ein Fahrer auf die Kommunikationslichtvorrichtung 12, die in der Frontscheibenwurzel angeordnet ist, blickt. Hier sind die Lichtquellen 18 in Reihe nebeneinander angeordnet dargestellt und die Lichtaustrittsöffnung 20 kann in Richtung des Fahrzeuginnenraums, insbesondere in Richtung eines Fahrers des Kraftfahrzeugs, weisen. Zwischen den jeweiligen Lichtquellen 18 können die Blendstege 26 angeordnet sein, die beispielsweise als Pyramidenstümpfe ausgebildet sind.

Eine Spitze der Blendstege 26 kann vorzugsweise stumpf beziehungsweise rundlich gestaltet sein. Das heißt, dass diese vorzugsweise keine scharfen beziehungsweise harten Kanten aufweisen, wodurch Artefakte in der Lichtmischung zwischen benachbarten Lichtquellen 18 verringert werden können. Eine Höhe der Blendstege 26 kann beeinflussen, wie hoch ein Übersprechen der Lichtsignale zwischen den benachbarten Lichtquellen 18 ist. Bei niedrigen Blendstegen 26 kann ein höheres Übersprechen stattfinden, womit beispielsweise fließende Farbübergänge erreicht werden können. Werden die Blendstege 26' höher ausgebildet, insbesondere bis kurz unter die Lichtaustrittsöffnung 20, so kann ein Übersprechen der Lichtsignale verringert werden, wodurch schärfere Abgrenzungen der Lichtsignale der einzelnen Lichtquellen 18 erreicht werden können. Somit können beispielsweise schärfere Farbübergänge bereitgestellt werden.

Die Höhe der Blendstege 26, 26' kann beispielsweise in einem Herstellungsprozess vorgegeben werden, alternativ kann jedoch auch vorgesehen sein, dass die Blendstege variabel verfahrbar ausgebildet sind und somit ein Übersprechen beziehungsweise ein Mischen der Lichtsignale gesteuert werden kann. Hierzu können die Blendstege 26 beispielsweise als Lamellen ausgebildet sein, die über Elektromotoren (nicht gezeigt) zwischen den Lichtquellen 18 heraus- oder hereingefahren werden können. Somit kann ein gewolltes Übersprechen der Lichtsignale durch eine Steghöhe beeinflusst und gesteuert werden.

Insgesamt zeigen die Beispiele, wie durch die Erfindung eine Beleuchtungseinrichtung im Fahrzeuginnenraum bereitgestellt werden kann.

## Patentansprüche

1. Kommunikationslichtvorrichtung (12) für einen Fahrzeuginnenraum,
mit einem Gehäuse (14), wobei an einem Gehäuseboden (16) Lichtquellen (18) in einer Reihe angeordnet sind, wobei die Lichtquellen (18) dazu ausgebildet sind, ein zeitlich ansteuerbares Lichtsignal zu erzeugen, wobei eine Seitenwand des Gehäuses eine Lichtaustrittsöffnung (20) aufweist, die sich in Richtung der Reihe der Lichtquellen (18) über die Seitenwand erstreckt und die in einer bestimmungsgemäßen Einbaulage der Kommunikationslichtvorrichtung (12) in Richtung des Fahrzeuginnenraums weist, und wobei Innenwände (22) des Gehäuses (14) eine diffus reflektierende Oberfläche aufweisen;
**dadurch gekennzeichnet, dass**
zwischen den jeweiligen Lichtquellen Blendstege (26, 26') angeordnet sind, wobei die Blendstege (26. 26') dazu ausgebildet sind, in Abhängigkeit ihrer Höhe ein Übersprechen der Lichtsignale zwischen den Lichtquellen (18) zu beeinflussen, wobei die Blendstege (26, 26') dazu ausgebildet sind, die Höhe variabel zu ändern.

2. Kommunikationslichtvorrichtung (12) nach Anspruch 1, wobei zum Reflektieren des Lichtsignals in Richtung der Lichtaustrittsöffnung (20) eine den Lichtquellen gegenüberliegende Innenwand (22) des Gehäuses (14) im Wesentlichen schräg angeordnet ist.

3. Kommunikationslichtvorrichtung (12) nach einem der vorhergehenden Ansprüche, wobei an oder in der Lichtaustrittsöffnung (20) ein Diffusor (24) angeordnet ist.

4. Kommunikationslichtvorrichtung (12) nach einem der vorhergehenden Ansprüche, wobei die Lichtquellen (18) als Leuchtdioden ausgebildet sind.

5. Kommunikationslichtvorrichtung (12) nach einem der vorhergehenden Ansprüche, wobei die Lichtquellen (18) sowohl nebeneinander als auch hintereinander in der Reihe angeordnet sind.

6. Kommunikationslichtvorrichtung (12) nach einem der vorhergehenden Ansprüche, wobei die Lichtquellen (18) dazu ausgebildet sind, ein farblich ansteuerbares Lichtsignal zu erzeugen.

7. Kommunikationslichtvorrichtung (12) nach einem der vorhergehenden Ansprüche, wobei die diffus reflektierende Oberfläche eine weiße Oberfläche und/oder eine mit Aluminium bedampfte Schicht aufweist.

8. Kommunikationslichtvorrichtung (12) nach einem der vorhergehenden Ansprüche, wobei die diffus reflektierende Oberfläche zusätzliche geometrische Strukturen, insbesondere Kissen und/oder Walzen, aufweist.

9. Kommunikationslichtvorrichtung (12) nach einem der vorhergehenden Ansprüche, wobei die diffus reflektierende Oberfläche uneben ist, insbesondere eine Körnung aufweist.

10. Kraftfahrzeug (10) mit einer Kommunikationslichtvorrichtung (12) nach einem der vorhergehenden Ansprüche.

11. Kraftfahrzeug (10) nach Anspruch 10, wobei die Kommunikationslichtvorrichtung (12) an einer Frontscheibenwurzel angeordnet ist.

## Claims

1. Communication light device (12) for a vehicle interior
having a housing (14), wherein light sources (18) are arranged in a row on a housing base (16), wherein the light sources (18) are designed to generate a time-controllable light signal, wherein a side wall of the housing has a light exit opening (20) which extends across the side wall in the direction of the row of light sources (18) and which points towards the vehicle interior when the communication light device (12) is in an intended installation position, and wherein internal walls (22) of the housing (14) have a diffusely reflecting surface;
**characterized in that**
baffles (26, 26') are arranged between the respective light sources, wherein the baffles (26, 26') are designed to influence crosstalk of the light signals between the light sources (18) as a function of their height, wherein the baffles (26, 26') are designed to variably change the height.

2. Communication light device (12) according to Claim 1, wherein an inner wall (22) of the housing (14) opposite the light sources is arranged substantially obliquely in order to reflect the light signal in the direction of the light exit opening (20).

3. Communication light device (12) according to either of the preceding claims, wherein a diffuser (24) is arranged on or in the light exit opening (20).

4. Communication light device (12) according to any one of the preceding claims, wherein the light sources (18) are designed as light-emitting diodes.

5. Communication light device (12) according to any one of the preceding claims, wherein the light sources (18) are arranged both next to one another and one behind the other in the row.

6. Communication light device (12) according to any one of the preceding claims, wherein the light sources (18) are designed to generate a color-controllable light signal.

7. Communication light device (12) according to any one of the preceding claims, wherein the diffusely reflecting surface has a white surface and/or a vapor deposited layer with aluminum.

8. Communication light device (12) according to any one of the preceding claims, wherein the diffusely reflecting surface has additional geometric structures, in particular cushions and/or rollers.

9. Communication light device (12) according to any one of the preceding claims, wherein the diffusely reflecting surface is uneven, in particular has a grain.

10. Motor vehicle (10) having a communication light device (12) according to any one of the preceding claims.

11. Motor vehicle (10) according to Claim 10, wherein the communication light device (12) is arranged on a windshield root.

## Revendications

1. Dispositif lumineux de communication (12) pour un habitacle de véhicule,
comportant un boîtier (14), dans lequel des sources de lumière (18) sont agencées dans une rangée sur une base de boîtier (16), les sources de lumière (18) étant configurées pour générer un signal lumineux pouvant être commandé dans le temps, une paroi latérale du boîtier comportant un orifice de sortie de lumière (22) qui s'étend à travers la paroi latérale en direction de la rangée de sources de lumière (18) et qui pointe vers l'habitacle de véhicule lorsque le dispositif lumineux de communication (12) est dans une position de montage voulue, et des parois intérieures (22) du boîtier (14) comportant une surface réfléchissant de manière diffuse ;
**caractérisé en ce que**
des déflecteurs (26, 26') sont agencés entre les sources de lumière respectives, les déflecteurs (26, 26') étant configurés pour influer sur une diaphonie des signaux lumineux entre les sources de lumière (18) en fonction de leur hauteur, les déflecteurs (26, 26') étant configurés pour changer la hauteur de manière variable.

2. Dispositif lumineux de communication (12) selon la revendication 1, dans lequel une paroi intérieure (22) du boîtier (14) opposée aux sources de lumière est agencée de manière sensiblement oblique pour réfléchir le signal lumineux en direction de l'orifice de sortie de lumière (20).

3. Dispositif lumineux de communication (12) selon l'une des revendications précédentes, dans lequel un diffuseur (24) est agencé sur ou dans l'orifice de sortie de lumière (20).

4. Dispositif lumineux de communication (12) selon l'une des revendications précédentes, dans lequel les sources de lumière (18) sont réalisées sous forme de diodes électroluminescentes.

5. Dispositif lumineux de communication (12) selon l'une des revendications précédentes, dans lequel les sources de lumière (18) sont agencées aussi bien les unes à côté des autres que les unes derrière les autres dans la rangée.

6. Dispositif lumineux de communication (12) selon l'une des revendications précédentes, dans lequel les sources de lumière (18) sont configurées pour générer un signal lumineux pouvant être commandé par couleur.

7. Dispositif lumineux de communication (12) selon l'une des revendications précédentes, dans lequel la surface réfléchissant de manière diffuse comporte une surface blanche et/ou une couche d'aluminium déposée en phase vapeur.

8. Dispositif lumineux de communication (12) selon l'une des revendications précédentes, dans lequel la surface réfléchissant de manière diffuse comporte des structures géométriques supplémentaires, en particulier des coussins et/ou des rouleaux.

9. Dispositif lumineux de communication (12) selon l'une des revendications précédentes, dans lequel la surface réfléchissant de manière diffuse est irrégulière et présente en particulier une granularité.

10. Véhicule à moteur (10) ayant un dispositif lumineux de communication (12) selon l'une des revendications précédentes.

11. Véhicule à moteur (10) selon la revendication 10, dans lequel le dispositif lumineux de communication (12) est agencé sur un pied de pare-brise.
